# EUROPEAN PATENT APPLICATION

(11) **EP 4 582 461 A1**
(43) Date of publication of application: **09.07.2025**
(21) Application number: 24150572.6
(22) Date of filing: 05.01.2024
(51) Int. Cl.: C08F 2/01, B01J 8/18, B01J 19/24, C08F 2/34, C08F 10/06

(54) **PROCESS AND APPARATUS FOR THE POLYMERIZATION OF OLEFINS IN A REACTOR HAVING TWO INTERCONNECTED POLYMERIZATION ZONES**

(71) Applicant: Basell Poliolefine Italia S.r.l., 20121 Milano (IT)
(72) Inventor: PALMIERI, Teodoro, 44122 Ferrara (IT); BALESTRA, Enrico, 44122 Ferrara (IT); RINALDI, Riccardo, 44122 Ferrara (IT); ZANDEGIACOMO RIZIO, Anna, 44122 Ferrara (IT)
(74) Representative: LyondellBasell

(57) **Abstract**

Process and apparatus for the gas-phase polymerization of olefins to produce monomodal or multimodal polyolefins, carried out in a reactor having two interconnected polymerization zones, wherein a liquid barrier stream is established between said zones to produce multimodal polyolefins by using a liquid monomer conveyed through a pipeline connected to a second pipeline suitable to feed a gas stream at a defined point, said gas stream being used during the production of monomodal polyolefins to replace said liquid barrier.

## Description

### FIELD OF THE INVENTION

The present invention relates to a process and an apparatus for the polymerization of olefins carried out in a reactor having two interconnected polymerization zones, also known as multizone circulating reactor (MZCR).

### BACKGROUND OF THE INVENTION

As described, among others, in Applicant's earlier patent EP 1012195 B1, in a multizone circulating reactor (MZCR) the polymer particles flow upwards through a first polymerization zone, designated as "riser", under fast fluidization or transport conditions, leave said riser and enter a second polymerization zone, designated as "downcomer", through which they flow in a densified form under the action of gravity. A continuous circulation of polymer is established between the riser and the downcomer.

In a MZCR it is possible to obtain, within the same polymerization apparatus, two polymerization zones with different composition by feeding a gas/liquid stream, designated as "barrier stream", to the upper part of the downcomer. The gas/liquid stream acts as a barrier to the gas phase coming from the riser, and is capable of establishing a net gas flow upward in the upper portion of the downcomer. The established flow of gas upward has the effect of preventing the gas mixture present in the riser from entering the downcomer.

The polymerization process carried out in a MZCR is particularly useful for preparing, in a single reactor, broad molecular weight olefin polymers and, particularly, multimodal olefin polymers, whereby the term "multimodal" refers to the modality of the molecular weight distribution. As used in the art, and also used herein, multimodal includes bimodal.

Multimodal polymers, which are otherwise obtained by polymerizing olefins in a cascade of two or more polymerization reactors, can be obtained in a single MZCR, thanks to the different reaction conditions zones that are established and maintained in the riser and in the downcomer. Therefore, in-reactor blends of low molecular weight and high molecular weight polymers can thus be advantageously produced in a single reactor.

Although a MZCR is particularly advantageous for preparing multimodal olefin polymers, it can also be used to produce monomodal olefin polymers. In this latter case, a barrier between the riser and the downcomer is not necessary. In the former case, for example in the production of bimodal polypropylene, the barrier consists of a stream of liquid propylene, which is delivered through the holes of an array of rods located in the upper part of the downcomer, designated as "barrier rods". Therefore, when the MZCR is used to produce a monomodal polymer, e.g., monomodal polypropylene, and a barrier between the riser and the downcomer is not needed, a gas stream, e.g., propylene and propane, and possibly others, such as ethylene, is injected through the holes just to keep them clean. This gas stream does not form a barrier to the flow of gas coming from the riser, e.g., hydrogen, which can thus enter the downcomer. Without barrier, the reaction conditions in the riser and in the downcomer are the same, so that a monomodal polypropylene can be produced.

When the MZCR is used to produce a multimodal polymer, e.g., multimodal polypropylene, liquid propylene is fed to the barrier rods via a line typically coming from two different sources: a source of fresh liquid propylene and a source of recycled liquid propylene, which can contain impurities, such as residues of heavier monomers, of oligomers and even of catalyst and co-catalyst. If this recycled liquid propylene is continuously fed to the barrier rods, as during the production of multimodal polymers, the formation of deposits of solids in the pipeline is unlikely, and the holes of the barrier rods remain clean. If the flow of recycled liquid propylene, however, is stopped, as during the production of monomodal polymers, the liquid propylene with its impurities remains stagnant in the pipeline during the entire campaign of production of monomodal polymers, so that deposits of solids can be formed in the pipeline. When the flow of liquid propylene is resumed, typically upon transition from monomodal to multimodal production, the solid particles are transported to the barrier rods and the holes of the barrier rods can be obstructed.

In view of the foregoing, there is a need of improving the operation of an olefin polymerization process carried out in carried out in a reactor having two interconnected polymerization zones by reducing or avoiding the formation of deposits and the obstruction of holes in the barrier rods, particularly upon transition from the production of monomodal polymers to the production of multimodal polymers.

### SUMMARY OF THE INVENTION

It is therefore an object of the present invention a process for the gas-phase polymerization of olefins to produce multimodal polyolefins (I) or monomodal polyolefins (II), the process being carried out in a reactor having two interconnected polymerization zones, wherein the growing polymer particles flow through the first of said polymerization zones (riser) under fast fluidization conditions, leave said riser and enter the second of said polymerization zones (downcomer) through which they flow downward in a densified form, leave said downcomer and are reintroduced into said riser, thus establishing a circulation of polymer between the riser and the downcomer, and wherein:
I. when the process is operated to produce multimodal polyolefins, a liquid stream is introduced into the upper part of said downcomer through an array of rods provided with holes, said liquid stream comprising liquid monomer which is withdrawn from the bottom of a distillation column and is introduced into said rods via a first pipeline of length A-C, defined by a starting point A at the bottom of said distillation column and an end point C at the connection with said barrier rods in said reactor; and
II. when the process is operated to produce monomodal polyolefins, a gas stream is introduced into said rods provided with holes from a second pipeline connected to said first pipeline at a point B, whereby a length A-B is defined in said first pipeline from said starting point A at the bottom of said distillation column and said point B;
the process being characterized in that the ratio between said length A-B and said length A-C is from 0.5 to 0.01.

Another aspect of the invention concerns an apparatus for the gas-phase polymerization of olefins comprising a reactor having two interconnected polymerization zones, comprising:
- a riser, through which the polymer particles flow upwards under fast fluidization conditions or transport conditions;
- a downcomer, through which the polymer particles flow downward in a densified form under the action of gravity,
- an array of rods provided with holes, located in the upper part of said downcomer; a first pipeline connected to said array of rods, said first pipeline having a length A-C defined by a starting point A at the bottom of a distillation column and an end point C at the connection with said array of rods; and
- a second pipeline connected to said first pipeline at a point B, whereby a length A-B is defined in said first pipeline from said starting point A at the bottom of said distillation column and said point B;
the apparatus being characterized in that the ratio between said length A-B and said length A-C is from 0.5 to 0.01.

### BRIEF DESCRIPTION OF THE DRAWINGS

- Fig. 1 is a scheme of a part of a set-up of a polymerization process and plant according to the prior art; and
- Fig. 2 is a scheme of a part of a set-up of a polymerization process and plant according to the invention.

### DETAILED DESCRIPTION OF THE INVENTION

The process of the present invention is addressed to improve the operability of a gas-phase reactor having interconnected polymerization zones, designated as multizone circulating reactor (MZCR).

In the first polymerization zone (riser), fast fluidization conditions are established by feeding a gas mixture comprising one or more alpha-olefins at a velocity higher than the transport velocity of the polymer particles. The velocity of said gas mixture is generally comprised between 0.5 and 15 m/s, preferably between 0.8 and 5 m/s. The terms "transport velocity" and "fast fluidization conditions" are well known in the art; for a definition thereof, see, for example, "D. Geldart, Gas Fluidization Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer.

Throughout the present description a "densified form" of the polymer implies that the ratio between the mass of polymer particles and the reactor volume is higher than 80% of the "poured bulk density" of the obtained polymer. Thus, for instance, in case of a polymer bulk density equal to 420 Kg/m³, "densified conditions" of the polymer flow are satisfied if the polymer mass/reactor volume ratio is higher than 336 kg/m³. The "poured bulk density" of a polymer is a parameter well known to the person skilled in the art: it can be measured according to ASTM D1895/69. In view of the above explanation, it is clear that in the downcomer the polymer flows downward in a plug flow and only small quantities of gas are entrained with the polymer particles.

The operating parameters, such as temperature and pressure, are those that are usual in gas-phase catalytic polymerization processes. For example, in both riser and downcomer the temperature is generally comprised between 60°C and 120°C, while the pressure can vary from 5 to 50 bar.

According to the process of the present invention, the two interconnected polymerization zones can be operated by partially or totally preventing that the gas mixture coming from the riser enter the downcomer, so that different polymerization conditions are established in the riser and in the downcomer. This allows, for example, to broaden the molecular weight distribution of polymers without affecting their homogeneity.

The different polymerization conditions in the riser and in the downcomer are obtained by introducing into the upper part of the downcomer a liquid stream having a composition different from the gaseous mixture present in the riser. This liquid mixture fed into the upper part of the downcomer totally or partially replaces the gas mixture entrained with the polymer particles entering the downcomer. The partial evaporation of said liquid mixture generates in the upper part of the downcomer a flow of gas, which moves counter-currently to the flow of descendent polymer, thus acting as a barrier to the gas mixture coming from the riser and entrained among the polymer particles. This liquid stream is designated as "barrier stream".

The established upward flow of gas has the effect of preventing the gas mixture present in the riser from entering the downcomer. This causes a difference in the concentration of monomers or of hydrogen, used as molecular weight regulator, between the riser and the downcomer, so as a bimodal polymer can be produced in the MZCR.

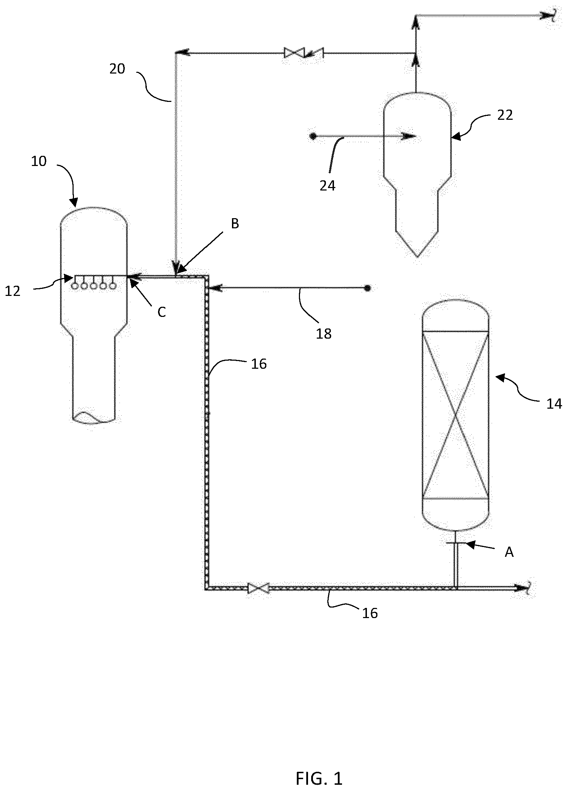

Fig. 1 shows a scheme of a part of a polymerization process according to the prior art, in which the upper part of the downcomer of a MZCR is designated with 10. An array of rods 12 provided with holes is located in the upper part of the downcomer 10 to deliver a stream of liquid or a stream of has in the downcomer 10. Rods 12 provided with holes are designated as "barrier rods".

A distillation column 14 is used to separate by distillation a monomer, e.g., propylene in case of production of polypropylene, from a mixture comprising unreacted propylene from the MZCR. This propylene is withdrawn from the bottom of column 14, at a point designated as "A", and is recycled to the MZCR via a first pipeline 16, which enters the downcomer 10 at a point designated as "C", and is connected to array of rods 10. "A" and "C" are thus the starting point and the end point of the first pipeline 16.

A MZCR can be used to operate a polymerization process to produce multimodal polymers or monomodal polymers, e.g., multimodal or monomodal polypropylene, including at least random copolymers thereof.

When the MZCR is used to produce a multimodal polymer, a liquid barrier must be established between the riser and the downcomer, to have different compositions and concentrations of monomers or of hydrogen. Therefore, when the MZCR is used to produce a multimodal polymer, e.g., multimodal polypropylene, liquid propylene is fed to the barrier rods 12 via the first pipeline 16, which conveys recycled liquid propylene.

To have a sufficient amount of liquid propylene to form the liquid barrier, however, fresh liquid propylene can also be introduced in the first pipeline 16 through a line 18. Therefore, the amount of fresh propylene can be from 0 to 50 wt% of the total amount of propylene forming the liquid barrier stream. Typically, the amount of fresh propylene is from 10 to 40% of the total amount of propylene forming the liquid barrier stream.

Although the recycled propylene from column 14 can contain impurities, such as residues of heavier monomers, of oligomers and even of catalyst and co-catalyst, if it is continuously fed to the barrier rods 12 and does not remain stagnant in pipeline 16, so that the formation of deposits of solids does not occur, the holes of the barrier rods 12 remain clean.

Differently from the production of multimodal polymers, when the MZCR is used to produce a monomodal polymer, e.g., monomodal polypropylene, a liquid barrier between the riser and the downcomer must not be established. Therefore, the barrier rods 12 are no more used to create a liquid barrier. The holes of the rods, however, must be kept clean and not obstructed. This is achieved by continuously injecting a flow of gas through the holes.

With reference to Fig. 1, a gas stream is continuously introduced in the downcomer 10 via the barrier rods from the end portion B-C of the first pipeline 16, which is connected to a second pipeline 20 that withdraws the stream of gas from a filter unit 22, to which propylene is fed from a line 24. The second pipeline 20 connects to the first pipeline 16 at a point "B", just upstream the downcomer 10 of the MZCR. The gas stream fed to the barrier rods 12 does not prevent the gas coming from the riser to enter the downcomer, so that the same reaction conditions are established in the riser and in the downcomer.

The stream of gas injected through the holes of the barrier rods 12 from the filter unit 22 can comprises also an inert diluent gas, such as propane, besides gaseous propylene.

When switching from multimodal (I) to monomodal (II) polymer production, e.g., from multimodal to monomodal polypropylene, the flow of liquid propylene from the distillation column 14 is stopped, and only the gas stream from pipeline 20 is fed to the barrier rods 12 via the segment B-C of the first pipeline 16.

The consequence of the transition from multimodal to monomodal production is that during the campaign of production of monomodal polymers, the liquid propylene with its impurities remains stagnant in the pipeline 16 in the entire dotted segment A-C of Fig. 1, so that deposits of solids can be formed. When the flow of liquid propylene is resumed, typically upon transition from monomodal to multimodal production, the solid particles are transported to the barrier rods 12 and the holes of the barrier rods can be obstructed.

Typically, the segment of stagnant liquid extends for about the entire length of the first pipeline A-C, so that the ratio of segment A-B with respect to the length of pipeline A-C is about 0.8, i.e., A-B/A-C = 0.8.

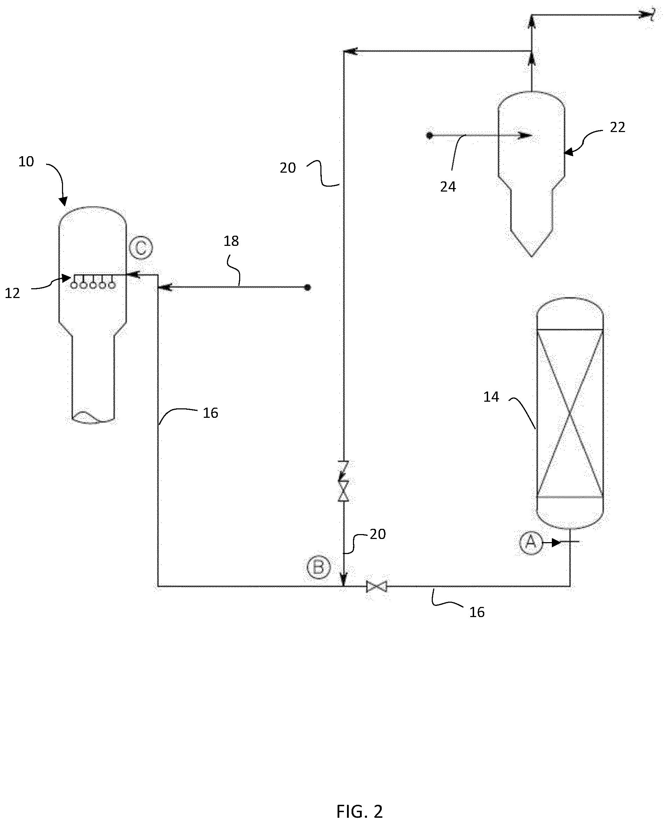

Fig. 2 shows a scheme of the same part of polymerization process of Fig. 1, but according to the present invention.

In this embodiment, the second pipeline 20 that conveys the gas stream from filter 22 to the barrier rods 12 via the portion B-C of the first pipeline 16, is connected to the first pipeline 16 at a point B which is much closer to the distillation column 14 than in the embodiment of Fig. 1. Therefore, the portion A-B of pipeline 16 is much shorter than in Fig. 1, and the occurrence of deposits is prevented. When the flow of liquid propylene is resumed, typically upon transition from monomodal (II) to multimodal (I) production, there are no solid particles deposited in the portion A-B of pipeline 16, so that the holes of the barrier rods 12 remain clean and unobstructed.

It has been found that optimal operation conditions are maintained when the ratio A-B/A-C is from 0.5 to 0.01, preferably from 0.4 to 0.05, more preferably from 0.3 to 0.05.

Another aspect of the invention concerns an apparatus for the gas-phase polymerization of olefins comprising a reactor having two interconnected polymerization zones (MZCR), as generally described in EP 1012195 B1 but with the set-up of present Fig. 2, comprising a riser through which the polymer particles flow upwards under fast fluidization conditions or transport conditions, and a downcomer 10 through which the polymer particles flow downward in a densified form under the action of gravity.

In the upper part of the downcomer 10 an array of rods 12 is mounted, each rod being provided with holes for introducing a stream of gas and/or liquid via a first pipeline 16 connected to said array of rods. The pipeline 16 has a length A-C, defined by a starting point A at the bottom of a distillation column 14 and an end point C at the connection with said array of rods in the downcomer 10.

The apparatus comprises a second pipeline 20, connected to the first pipeline 16 at a point B, whereby a distance A-B is defined in the first pipeline from starting point A at the bottom of the distillation column 14 and point B.

According to the invention, the apparatus is characterized by a ratio between the length A-B and the length A-C from 0.5 to 0.01. Preferably, the ratio A-B/A-C is from 0.4 to 0.05, more preferably the ratio A-B/A-C is from 0.3 to 0.05.

By adopting these features, the apparatus provides optimal operation of the process to produce both monomodal and multimodal polymers, also with alternate production of monomodal and multimodal polymers.

In particular, after a campaign of production of monomodal polypropylene, during which a flow of gas was injected through the holes of the barrier rods 12, the plant was operated to produce again bimodal polypropylene with a set-up of pipelines 16 and 20 as shown in present Fig. 2, and with a ratio of the length of segment A-B with respect to the length of pipeline A-C of 0.2. A liquid barrier was established by using the liquid propylene from pipeline 16. It was found that the process was operated smoothly without plugging of the holes of the barrier rods 12, which remained open and clean.

## Claims

1. Process for the gas-phase polymerization of olefins to produce monomodal polyolefins or multimodal polyolefins, carried out in a reactor having two interconnected polymerization zones, wherein growing polymer particles flow through the first of said polymerization zones (riser) under fast fluidization conditions, leave said riser and enter the second of said polymerization zones (downcomer) through which they flow downward in a densified form, leave said downcomer and are reintroduced into said riser, thus establishing a circulation of polymer between the riser and the downcomer, and wherein:
I. when the process is operated to produce multimodal polyolefins, a liquid stream is introduced into the upper part of said downcomer through an array of rods provided with holes, said liquid stream comprising liquid monomer which is withdrawn from the bottom of a distillation column and is introduced into said rods provided with holes via a first pipeline of length A-C, defined by a starting point A at the bottom of said distillation column and an end point C at the connection with said barrier rods in said reactor; and
II. when the process is operated to produce monomodal polyolefins, a gas stream is introduced into said rods provided with holes from a second pipeline connected to said first pipeline at a point B, whereby a length A-B is defined in said first pipeline from said starting point A at the bottom of said distillation column and said point B;
the process being **characterized in that** the ratio between said length A-B and said length A-C is from 0.5 to 0.01.

2. Process according to claim 1, **characterized in that** said ratio between said length A-B and said length A-C is from 0.4 to 0.05.

3. Process according to claim 1, **characterized in that** said ratio between said length A-B and said length A-C is from 0.3 to 0.05.

4. Process according to any claim 1-3, wherein said process (I) is operated to produce multimodal polyolefins and said liquid stream introduced into the upper part of said downcomer comprises recycled liquid monomer withdrawn from a distillation column and fresh monomer, **characterized in that** the amount of said fresh monomer to total amount of liquid monomer is from 0 to 50wt%.

5. Process according to claim 4, **characterized in that** the amount of said fresh monomer to total amount of liquid monomer is from 10 to 40wt%.

6. Process according to any claim 1-3, wherein said process (II) is operated to produce monomodal polyolefins and said gas stream is introduced into said rods provided with holes, **characterized in that** said gas stream is withdrawn from a filter unit.

7. Process according to any claim 1-6, wherein said polyolefin is polypropylene and said liquid monomer is propylene.

8. Apparatus for the gas-phase polymerization of olefins comprising a reactor having two interconnected polymerization zones, comprising:
- a riser, through which the polymer particles flow upwards under fast fluidization conditions or transport conditions;
- a downcomer (10), through which the polymer particles flow downward in a densified form under the action of gravity,
- an array of rods (12) provided with holes, located in the upper part of said downcomer (10)
- a first pipeline (16) connected to said array of rods (12), said first pipeline (16) having a length of a length A-C defined by a starting point A at the bottom of a distillation column (14) and an end point C at the connection with said array of rods (12); and
- a second pipeline (20) connected to said first pipeline at a point B, whereby a distance A-B is defined in said first pipeline (16) from said starting point A at the bottom of said distillation column (14) and said point B;
the apparatus being **characterized in that** the ratio between said length A-B and said length A-C is from 0.5 to 0.01.

9. Apparatus according to claim 8, **characterized in that** the ratio between said length A-B and said length A-C is from 0.4 to 0.05, preferably from 0.3 to 0.05.

10. Apparatus according to claim 8 or 9, **characterized by** comprising a pipeline (18) connected to said first pipeline (16) to introduce in the first pipeline (16) a fresh stream of liquid.

11. Apparatus according to any claim 6 - 10, **characterized in that** said second pipeline (20) is connected upstream to a filter unit (22) to filter a stream of gas conveyed by said second pipeline (20).
